(19) **Europäisches Patentamt European Patent Office Office européen des brevets**

(11) **EP 1 753 980 B1**

(12) **FASCICULE DE BREVET EUROPEEN**

(45) Date de publication et mention
de la délivrance du brevet:
**02.04.2008 Bulletin 2008/14**

(51) Int Cl.:
**F16H 59/48** *(2006.01)*

(21) Numéro de dépôt: **05762738.2**

(22) Date de dépôt: **19.05.2005**

(86) Numéro de dépôt international:
**PCT/FR2005/050341**

(87) Numéro de publication internationale:
**WO 2005/119099 (15.12.2005 Gazette 2005/50)**

(54) **Procédé de rétrogradage sur freinage au rapport 1**

Verfahren zum Herunterschalten in den ersten Gang beim Bremsen

Method for downshifting on braking to first gear

(84) Etats contractants désignés:
**AT BE BG CH CY CZ DE DK EE ES FI FR GB GR
HU IE IS IT LI LT LU MC NL PL PT RO SE SI SK TR**

(30) Priorité: **21.05.2004 FR 0405531**

(43) Date de publication de la demande:
**21.02.2007 Bulletin 2007/08**

(73) Titulaire: **RENAULT S.A.S.
92100 Boulogne Billancourt (FR)**

(72) Inventeurs:
• **BRUN, Eric
F-78180 Montigny-Le-Bretonneux (FR)**

• **POISSON, Carine
F- 91310 Montlhery (FR)**

(74) Mandataire: **Rougemont, Bernard
RENAULT TECHNOCENTRE
Département Propriété Intellectuelle
Sce 00267 TCR GRA 2 36
1, avenue du Golf
78288 Guyancourt cedex (FR)**

(56) Documents cités:
**DE-A- 10 110 663          FR-A- 2 765 652
US-A- 5 016 495          US-A- 5 555 170**

EP 1 753 980 B1

## Description

L'invention concerne un procédé de commande de changement de rapport pour une transmission automatique à rapports discrets d'un véhicule automobile permettant de gérer le rétrogradage sur freinage d'un rapport courant vers le rapport 1.

Les procédés connus de commande de changement de rapport pour transmissions automatiques à rapports discrets n'envisagent pas de traitement particulier pour la commande de rétrogradage sur freinage vers le rapport 1. Or il existe un certain nombre de situations de roulage très particulières, notamment l'arrivée sur un rond-point, pour lesquelles le rétrogradage vers le rapport 1 effectué par de tels procédés est inadapté à la situation de roulage. En effet, il a été constaté qu'avec les procédés connus de commande de changement de rapport, le rétrogradage vers le rapport 1 lors de l'arrivée sur un rond-point s'effectue de façon trop tardive, ce qui provoque une perte d'accélération importante lorsque la voiture est au milieu du rond-point. Cette perte d'accélération est indésirable en premier lieu parce qu'elle rend dangereux ce type de situation et d'autre part parce qu'elle nuit au confort de conduite. Ce défaut de commande de changement de rapport est dû en grande partie au fait que les temps de décision des procédés usuels de commande de changement de rapport sont trop longs par rapport à l'occurrence rapide de ce genre de situations.

Un procédé de commande des phases de rétrogradage d'une transmission automatique à rapports discrets pour véhicule automobile est connu par le document FR 2 765 652. Ce procédé permet d'adapter les décisions de changement de rapport dans les phases de freinage du véhicule, en fonction d'une pluralité de paramètres, de manière à sélectionner un rapport apportant un plus grand confort de conduite. Ce procédé se base sur la valeur du régime d'une turbine et la mesure de l'accélération du véhicule pour déterminer s'il est nécessaire d'entrer dans un régime spécial de rétrogradage. D'autres paramètres relatifs à la situation de roulage peuvent également être pris en compte, par exemple la déclivité de la route. Toutefois ce procédé ne traite pas le cas particulier des rétrogradages vers le rapport 1 et n'est pas adaptable aux situations de roulage particulières telles que l'arrivée sur un rond-point

Bien entendu, le conducteur conduisant un véhicule équipé d'une boîte automatique a toujours la possibilité de rétrograder à volonté par action sur le levier de vitesse, mais il y a dans ce cas perte du caractère « automatique » de la transmission.

L'invention a donc pour but de proposer un procédé de commande de changement de rapport pour une transmission automatique à rapports discrets d'un véhicule automobile permettant d'adapter les rétrogradages sur freinage vers le rapport 1 à certaines situations particulières, telles que l'arrivée sur un rond-point.

Dans ce but l'invention a pour objet un procédé de commande de changement de rapport pour une transmission automatique à rapports discrets d'un véhicule automobile permettant de gérer le rétrogradage sur freinage d'un rapport RX courant vers le rapport 1, procédé suivant lequel à l'occurrence d'au moins une situation de roulage particulière du véhicule, on substitue un mode spécial de commande de changement de rapport au mode normal de commande de changement de rapport, caractérisé en ce qu'il consiste à :

> a) déterminer la valeur courante de la vitesse moyenne et la valeur courante de la décélération du véhicule automobile, '
> b) déterminer une valeur de référence d'une grandeur prédéterminée en fonction de la valeur courante de la vitesse moyenne et de la valeur courante de la décélération du véhicule automobile,
> c) décider, en fonction de ladite valeur de référence, d'activer ou non ledit mode spécial de commande de changement de rapport, consistant à passer lors du freinage du véhicule du rapport RX au rapport 1 de manière anticipée par rapport au mode normal de commande de changement de rapport

Le procédé selon l'invention est destiné notamment à la commande des rétrogradages du rapport 2 au rapport 1, mais est également applicable à la commande de rétrogradage du rapport 3 au rapport 1, ou du plus généralement du rapport RX au rapport 1 (RX étant supposé supérieur à 1).

De préférence, ladite valeur de référence est une valeur de seuil pour ladite grandeur prédéterminée et on décide de l'activation du mode spécial de commande de changement de rapport en fonction du résultat de la comparaison de ladite valeur de seuil avec une valeur de mesure de ladite grandeur prédéterminée. Selon un mode de réalisation particulièrement avantageux ladite grandeur prédéterminée est le régime primaire de transmission et ladite valeur de référence est une valeur de seuil pour le régime primaire de transmission en dessous de laquelle le mode spécial de commande de changement de rapport est activé.

Le procédé selon l'invention repose notamment sur la constatation que les situations de roulage nécessitant un rétrogradage anticipé peuvent être reconnues à partir de la valeur moyenne de la vitesse du véhicule et de la valeur de sa décélération en freinage. On distingue ainsi dans le cadre de cette invention deux types de situations particulières de roulage pour lesquelles la question du rétrogradage anticipé se pose : d'une part les situations avec freinage ne nécessitant pas l'arrêt du véhicule, du type « cédez le passage », lors de l'arrivée sur un rond-point ou à une intersection, nommé ici type A, pour lesquelles un rétrogradage sur freinage au rapport 1 devrait être effectué de manière anticipée par rapport au mode normal de commande de changement de rapport ; d'autre part les situations du type « suivi de file », nommé ici type B, pour lesquelles un tel rétrogradage anticipé par rapport au mode normal de commande de changement de rapport n'est au contraire pas souhaitable. Dans ces deux types de situations le conducteur freine, mais de manière chaque fois différente et la question de l'opportunité d'un rétrogradage au rapport 1 se pose de manière différente. Dans le premier type de situation, la vitesse moyenne du véhicule est relativement élevée, la durée de freinage relativement longue et le rétrogradage au rapport 1 doit s'effectuer très tôt pour éviter des inconvénients tels qu'une perte d'accélération à un moment inapproprié. Dans le deuxième type de situation, la vitesse moyenne est en général beaucoup plus faible, et bien que te conducteur effectue de fréquents appuis légers et ponctuels sur le frein, il n'est pas nécessaire de rétrograder au rapport 1, sauf, toutefois, si la vitesse du véhicule devenait trop basse. Il est donc possible de faire la distinction entre ces deux types de situations sur la base de la valeur moyenne de la vitesse du véhicule et de sa décélération, car dans ces situations, la valeur moyenne de la vitesse du véhicule et sa décélération se trouvent dans des plages de valeurs déterminées différentes.

Le procédé selon l'invention procède donc à la détermination de la valeur courante de la vitesse moyenne et de la valeur courante de la décélération du véhicule. Le procédé consiste en outre à déterminer une valeur de référence d'une grandeur prédéterminée en fonction de ces valeurs courantes de vitesse moyenne et de décélération. En fonction de cette valeur de référence est prise la décision d'entrée dans un mode spécial de commande de changement de vitesse consistant à rétrograder de manière anticipée au rapport 1. La valeur de référence est de préférence une valeur de seuil pour ladite grandeur prédéterminée et on décide de l'activation du mode spécial de commande de changement de rapport en fonction du résultat de la comparaison de la valeur de seuil avec une valeur de mesure de ladite grandeur prédéterminée.

Selon un mode de réalisation particulièrement avantageux, ladite grandeur prédéterminée est le régime primaire de transmission (vitesse de rotation de l'arbre primaire de transmission) et la valeur de référence correspond à une valeur de seuil pour le régime primaire de transmission en dessous de laquelle un rétrogradage anticipé est activé. De préférence, dès que le régime primaire réel (mesuré) devient inférieur à cette valeur de référence ou valeur de seuil, la décision de rétrogradage au rapport 1 est prise.

De manière avantageuse la sortie du mode spécial de commande de changement de rapport s'effectue après écoulement d'une durée prédéterminée de temporisation ou lorsque le rapport demandé dans le mode normal de commande de changement de rapport devient égal au rapport 1.

D'autres caractéristiques et avantages du procédé selon l'invention apparaîtront à la lumière de la description qui va suivre. Dans les dessins auxquels il est fait référence :

- la figure 1 est un schéma-bloc simplifié illustrant la mise en oeuvre du procédé selon l'invention,
- les figures 2 et 3 illustrent le mode de calcul de certains paramètres du procédé selon l'invention,
- 1a figure 4 est un organigramme simplifié d'un exemple de mise en oeuvre du procédé selon l'invention.

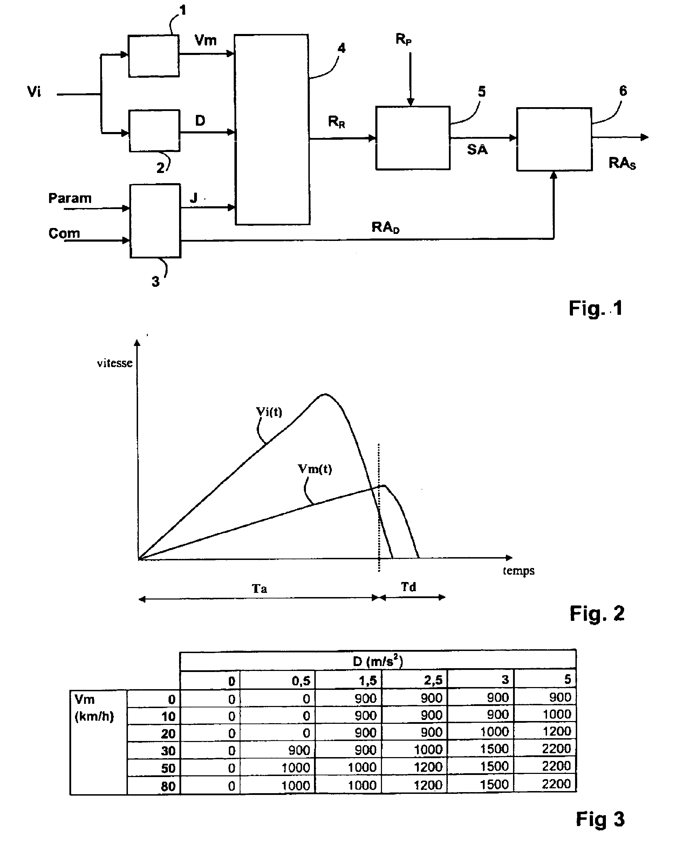

Le schéma-bloc représenté à la figure 1 illustre un mode de réalisation préféré de l'invention. Les blocs 1 à 6 qui y figurent sont des blocs fonctionnels mis en oeuvre sous forme de programmes, de sous-programmes ou de fonctions de programme dans le calculateur du véhicule qui sert à générer la commande de changement de rapport pour la boîte de vitesse automatique.

Le schéma-bloc de la figure 1 comprend en entrée un signal Vi(t) correspondant à la valeur courante de la vitesse instantanée du véhicule. Cette valeur de vitesse instantanée est typiquement une valeur de mesure et peut être déterminée de manière quelconque, par exemple par un capteur ou compteur de nombres de tours au niveau de l'arbre de transmission primaire du véhicule ou au niveau de l'axe des roues.

Le schéma-bloc de la figure 1 comprend un premier bloc 1 qui correspond à des moyens 1 de détermination de la valeur courante de la décélération du véhicule à partir de la valeur de la vitesse instantanée du véhicule. La détermination de la valeur courante de la décélération du véhicule D(t) en fonction du temps t peut se faire simplement par approximation de la dérivée de la vitesse du véhicule selon l'une des formules bien connues suivantes :

$$D(t)= ( Vi(t) - Vi(t - \Delta t) ) / \Delta t$$

ou bien,

$$D(t)= ( Vi(t + \Delta t) - Vi(t - \Delta t) ) / 2{*}\Delta t$$

où:

Vi(t) est la vitesse instantanée du véhicule à l'instant t,

$\Delta t$ est un intervalle de temps pour lequel se fait la détermination de la décélération, correspondant par exemple à l'intervalle de temps entre deux mesures successives de la vitesse instantanée Vi(t).

Toute autre méthode de calcul de la dérivée de la vitesse est également appropriée. De préférence c'est la valeur absolue de D(t) en phase de freinage qui sera utilisée dans le procédé selon l'invention, dans la mesure où on ne considère que les situations dans lesquelles il y a freinage; dans les autres situations, où donc le véhicule accélère, on pose arbitrairement D(t)= 0.

Un deuxième bloc 2 représenté de la figure 1 correspond à des moyens 2 de détermination de la valeur courante de la vitesse moyenne du véhicule à partir de la valeur de la vitesse instantanée du véhicule. La détermination de la valeur courante de la vitesse moyenne du véhicule s'effectue de préférence par filtrage passe-bas sur les valeurs de mesures de la vitesse instantanée du véhicule obtenues successivement, de préférence à intervalles de temps réguliers.

Selon un mode de réalisation particulier, et afin d'obtenir une valeur moyenne de vitesse qui soit exploitable de manière particulièrement efficace pour le procédé selon l'invention, on utilise une constante de temps pour le filtrage passe-bas qui est plus grande lorsque le véhicule accélère (augmentation de la vitesse instantanée Vi(t)) que lorsqu'il décélère (diminution de la vitesse instantanée Vi(t)). En effet, il est intéressant pour la détection des situations de roulage, que la valeur moyenne de la vitesse instantanée déterminée lors d'une accélération du véhicule augmente relativement lentement. Alors que lorsque le véhicule ralentit, il est intéressant que la valeur moyenne diminue très rapidement. En ajustant les constantes de temps pour le filtrage passe-bas en fonction de l'accélération ou de la décélération du véhicule, on obtient une vitesse moyenne qui est plus significative de la situation de roulage et donc facilite la détection de ces situations. La figure 2 illustre comment varie la vitesse moyenne Vm(t) en fonction du temps lorsque l'on applique ce principe de filtrage, dans le cas où la vitesse instantanée Vi(t) varie selon la courbe en cloche de la figure 2. Sur cette figure, on a représenté en outre par des doubles flèches les périodes de temps pendant lesquelles on applique la constante de temps Ta respectivement Td.

Le bloc 3 de la figure 1 correspond à des moyens 3 de détermination du jeu J de lois de commande utilisées par le mode normal du procédé de commande de changement de rapport de vitesse. Ces lois de commande sont déterminées de manière connue en fonction d'un jeu de paramètres Param, dont font partie le style de conduite (par exemple « normal », « sport », ...), la déclivité de la route, l'adhérence au sol (par exemple « normal », « neige », ...). Concrètement, le jeu J de lois qui est sélectionné en fonction de ces paramètres Param correspond à un programme ou sous-programme qui met en oeuvre, au sein du calculateur prévu à cet effet, la commande de changement de rapport dans le mode normal d'exécution de cette commande. Le mode normal de commande de changement de rapport détermine le rapport demandé $RA_D$ courant en fonction des valeurs de commandes Corn générées par le conducteur lorsqu'il actionne les pédales de frein et d'accélérateur du véhicule et en fonction du jeu de loi sélectionné. Ce bloc 3 est connu pour les transmissions à rapports discrets et ne sera pas décrit plus en détail ici.

Le bloc 4 correspond à des moyens 4 de détermination d'une valeur de référence $R_R$ qui va servir de valeur de consigne pour le bloc 5 suivant, décrit plus loin.

Cette valeur de référence est déterminée en fonction de la valeur courante de la vitesse moyenne déterminée par le bloc 2 et de la valeur courante de la décélération déterminée par le bloc 1. Elle dépend également du jeu J de lois courant. De préférence cette valeur de référence est une valeur de seuil pour le régime primaire de transmission en dessous de laquelle le mode spécial de commande de changement de rapport doit être déclenché.

Cette valeur de référence $R_R$ a été prédéterminée lors d'expérimentations préalables, réalisées dans les conditions réelles d'utilisation du véhicule ou réalisées par simulations, et ce notamment pour les situations de conduite de type A ou B. Dans de telles expérimentations, on enregistre ainsi pour un ensemble de couples de valeurs de vitesse moyenne et d'accélération, le régime du moteur à partir duquel le rétrogradage au rapport 1 devrait être engagé ou est souhaitable pour des raisons de confort de conduite. Ces expérimentations couvrent des plages suffisamment étendues de valeurs de vitesse moyenne et de valeurs de décélération de manière à couvrir au moins les plages correspondant aux situations de roulage de type A et B. Les valeurs de référence ou valeurs de seuil du régime primaire ainsi déterminées sont de préférence enregistrées en mémoire dans des tables à deux dimensions indexées par la valeur de la vitesse moyenne et la valeur de la décélération.

La valeur de référence représente, dans le mode préféré de mise en oeuvre du procédé selon l'invention, une valeur de seuil bas pour le régime primaire de transmission, en dessous de laquelle il y a lieu de rétrograder au rapport 1. Ainsi dans les tables caractéristiques, on enregistre pour les couples de valeurs (Vm, D) correspondant aux situations de roulage du type A la valeur seuil du régime primaire de transmission en dessous de laquelle le rétrogradage au rapport 1 s'impose. Pour les autres couples de valeurs (Vm, D), pour lesquelles il n'y a pas lieu d'anticiper le rétrogradage au rapport 1, on met une valeur de seuil très basse ou nulle, de manière que le régime primaire réel soit toujours au-dessus de ce seuil. Un exemple d'une table à deux dimensions est représenté en figure 3. On constate dans cette table que pour des décélérations de 5 m/s$^2$ et une vitesse moyenne entre 30 et 80 km/h la valeur de seuil du régime primaire a été fixée à 2200t/mn. Dès lors que la valeur réelle, en tant que valeur de mesure notamment, du régime primaire tombe en dessous de ce seuil pour ces plages de valeurs de vitesse moyenne et d'accélération, le rétrogradage au rapport 1 doit être effectué. Au contraire, pour des décélérations plus faibles, par exemple inférieures ou égales à 0,5 m/s$^2$ et quelle que soit la valeur de la vitesse moyenne, la valeur de seuil est nulle. Pour ces situations, le régime primaire est supérieur à ce seuil et le rétrogradage anticipé au rapport 1 n'est pas nécessaire.

Il s'est avéré suffisant pour ces tables à deux dimensions que les valeurs utilisées pour l'indexation soient espacées de 10km/h pour la vitesse moyenne et de 0,5 m/s$^2$ pour l'accélération. Une échelle non linéaire d'indexation est en outre utilisable comme dans l'exemple de table illustré à la figure 3, car la précision nécessaire pour les faibles valeurs de vitesse est plus importante que celle pour les hautes valeurs de vitesse. Du fait de l'espacement des valeurs d'indexation de la table à deux dimensions, lorsque la valeur courante de la vitesse moyenne respectivement de l'accélération se trouve comprise entre deux valeurs d'indexation consécutives, on effectue une interpolation linéaire entre les valeurs fixes données par la table. Par exemple, pour une valeur absolue de décélération comprise entre les valeurs 0,5 et 1,5 m/s$^2$, la valeur du régime de référence sera comprise entre 0 et 900 tr/min.

Du fait de l'utilisation de tables à deux dimensions dans lesquelles le régime primaire de transmission de référence est prédéterminé dans des conditions de vitesse et de décélération spécifiques, il n'est pas nécessaire lors de l'utilisation de ces tables de tester la valeur courante de la vitesse moyenne ou de celle de l'accélération par rapport à des seuils définissant les situations de roulage. Les tables incluent implicitement les seuils et la définition des situations de roulage, l'essentiel du travail de définition des situations de roulage et des seuils ayant été effectué dans la phase d'expérimentation ou calibration préalable. En outre le fait de déterminer une valeur de référence correspondant à une valeur de seuil rend très facile la décision d'entrée dans le mode spécial de commande de changement de rapport, un simple test de franchissement de ce seuil étant effectué.

La détermination du régime primaire de transmission de référence tient compte du jeu de lois sélectionné par le fait que ces tables caractéristiques à deux dimensions sont établies lors des phases d'expérimentation préalables, pour chaque jeu de lois de commande. On obtient donc une table par jeu de loi de commande. Ainsi de manière implicite, du fait que le jeu de lois de commande en entrée du bloc 4 est fonction des paramètres Param comme la pente ou l'adhérence de la route, le style de conduite, etc, et que le jeu de lois sélectionné détermine la table caractéristique qui est utilisée pour la détermination du régime primaire de transmission de référence, le procédé selon l'invention permet une adaptation implicite du mode de rétrogradage à ces mêmes paramètres. Ceci est d'un intérêt non négligeable dans la mesure où la prise en compte des conditions d'adhérence au sol est fondamentale pour que la décision de rétrogradage soit pleinement adaptée à la situation de roulage.

Le bloc 5 de la figure 1 correspond à des moyens 5 de détermination de la nécessité d'entrer dans le mode spécial de commande de changement de rapport de vitesse, ces moyens délivrant pour le bloc 6 suivant un signal SA de consigne d'activation de ce mode spécial. Dans le bloc 5, la valeur de référence est comparée avec une valeur de mesure. Dans l'exemple de mise en oeuvre, la valeur de seuil déterminée $R_R$ au bloc 4 est comparée à la valeur de mesure $R_P$ du régime primaire de transmission. Cette valeur de mesure du régime primaire de transmission est déterminée par exemple par mesure via un capteur de vitesse sur l'arbre primaire de transmission. Sur la base de la comparaison effectuée, la décision d'activation du mode spécial de commande de changement de rapport de vitesse est prise. Ainsi, lorsque le régime primaire de référence devient supérieur au régime primaire réel mesuré, le mode spécial de commande de changement de rapport de vitesse est activé. Le signal d'activation SA prend alors une valeur prédéterminée significative de l'activation du mode spécial, par exemple la valeur 1. Dans les autres cas, le signal d'activation SA prend une autre valeur significative de la non activation du mode spécial, par exemple la valeur 0. Selon un mode de réalisation particulier, lorsque le signal d'activation est non nul, sa valeur correspond à la valeur du rapport corrigé $RA_C$ demandé par le mode spécial.

Le bloc 6 reçoit le signal SA de consigne d'activation du mode spécial de rétrogradage et détermine en fonction de cette consigne le rapport de sortie $RA_S$. Ce rapport de sortie $RA_S$ est soit le rapport demandé $RA_D$ tel que déterminé par le jeu de loi de commande courant, soit le rapport corrigé $RA_C$ déterminé par le bloc 5 lorsque le mode spécial doit être activé. Le rétrogradage au rapport corrigé $RA_C$ sera appliqué dès que la décision d'entrée dans le mode spécial est prise par le bloc 5 et transmise au bloc 6. La valeur de $Ra_C$ vaut en fait 1 en permanence.

La durée de maintien du mode spécial de commande de changement de rapport dépend de plusieurs facteurs :

- le fait que le conducteur accélère ou pas,
- le fait que le rapport demandé $RA_D$ est égal à 1,
- une durée prédéterminée de temporisation.

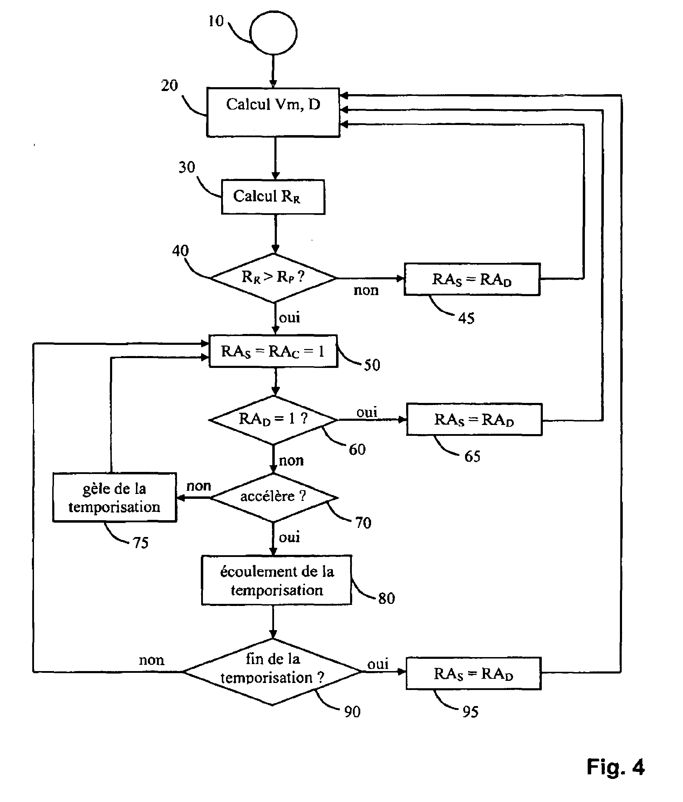

La figure 4 décrit un organigramme simplifié d'un exemple de mise en oeuvre du procédé selon l'invention précisant comment ces différents facteurs influent sur la durée de maintien du mode spécial. Le procédé démarre à l'étape 10. On détermine en 20 la valeur courante de la vitesse moyenne Vm et de la décélération D. On détermine en 30, par lecture dans la table à deux dimensions courante, le régime primaire de référence $R_R$ correspondant aux valeurs de Vm et de D obtenues à l'étape 20. Si à l'étape 40 on constate que le régime primaire de référence $R_R$ est supérieur au régime primaire réel $R_P$ on active à l'étape 50 le mode spécial de commande de changement de rapport et le rapport de sortie $RA_S$ devient égal au rapport corrigé $RA_C$ égal à 1. Dans le cas contraire on passe à l'étape 45, dans laquelle le rapport de sortie $RA_S$ est pris égal au rapport demandé $RA_D$ puis on revient à l'étape 20.

Suite à l'activation du mode spécial à l'étape 50, on teste à l'étape 60 si le rapport demandé $RA_D$ a la valeur 1. Si oui, on sort du mode spécial en passant à l'étape 65 dans laquelle le rapport de sortie $RA_S$ est pris égal au rapport demandé $RA_D$ puis on revient à l'étape 20. Si non, on teste à l'étape 70 si le conducteur accélère, c'est-à-dire s'il enfonce davantage la pédale d'accélérateur. Si le conducteur accélère, on passe à l'étape 80 où on laisse une temporisation s'écouler, typiquement par décrément d'une valeur de compteur correspondant à la durée restante de la temporisation. Si en réponse au test de l'étape 70 on détecte que le conducteur n'accélère pas (soit il freine, soit il maintient son appui sur la pédale d'accélérateur), on passe à l'étape 75 dans laquelle l'écoulement de la temporisation est gelé, c'est-à-dire qu'on ne modifie pas la valeur du compteur correspondant à la durée courante restante de la temporisation, puis on retourne à l'étape 50.

Suite à "étape 80, on vérifie à l'étape 90 si la durée de la temporisation est écoulée, par exemple en testant si la valeur courante du compteur correspondant à la durée courante restante de la temporisation est nulle ou non. Si la temporisation est écoulée, on sort du mode spécial en passant à l'étape 95 dans laquelle le rapport de sortie $RA_S$ est pris égal au rapport demandé $RA_D$ puis on revient à l'étape 20. Si la temporisation n'est pas écoulée on revient à l'étape 50. L'écoulement de la temporisation est ainsi gelé tant que le conducteur n'accélère pas.

Ainsi, en sortie du mode spécial, le rapport de sortie $RA_S$ déterminé par le bloc 6 est toujours le rapport demandé $RA_D$ en mode normal, tel que déterminé par le jeu de lois de commande.

Dans les boîtes de vitesse robotisées, le rétrogradage anticipé au rapport 1 peut être lancé pendant la réalisation d'un passage vers un autre rapport (situation dite d'interruption de passage), le rétrogradage au rapport 1 étant prioritaire dans le procédé selon l'invention.

Le procédé selon l'invention a été décrit vis à vis des décisions de rétrogradage d'un rapport 2 au rapport 1, mais il reste applicable de la même façon pour un rétrogradage d'un rapport RX au rapport 1, notamment du rapport 3 au rapport 1, si des situations particulières de roulage le nécessitent et sont détectables au moyen de la vitesse moyenne du véhicule ou de sa décélération.

En outre une grandeur autre que le régime primaire de transmission pourrait être utilisée pour le procédé selon l'invention. Ainsi toute grandeur qui dépend de manière connue du régime primaire de transmission peut également être envisagée. Le régime primaire de transmission de référence est utilisé dans le mode de réalisation préféré de l'invention car cette grandeur permet une détermination expérimentale simple et efficace de la valeur de seuil utilisable pour la décision d'entrée dans le mode spécial de commande de changement de rapport.

## Revendications

**1.** Procédé de commande de changement de rapport pour une transmission automatique à rapports discrets d'un véhicule automobile permettant de gérer le rétrogradage sur freinage d'un rapport RX courant vers le rapport '1, procédé suivant lequel à l'occurrence d'au moins une situation de roulage particulière du véhicule, on substitue un mode spécial de commande de changement de rapport au mode normal de commande de changement de rapport, **caractérisé en ce qu'**il consiste à :

a) déterminer la valeur courante de la vitesse moyenne (Vm) et la valeur courante de la décélération (D) du véhicule automobile,
b) déterminer une valeur de référence ($R_R$) d'une grandeur prédéterminée ($R_P$) en fonction de la valeur courante de la vitesse moyenne (Vm) et de la valeur courante de la décélération du véhicule automobile (D),
c) décider, en fonction de ladite valeur de référence ($R_R$), d'activer ou non ledit mode spécial de commande de changement de rapport, consistant à passer lors du freinage du véhicule du rapport RX au rapport 1 de manière anticipée par rapport au mode normal de commande de changement de rapport.

**2.** Procédé selon la revendication 1, **caractérisé en ce que** ladite valeur de référence ($R_R$) est une valeur de seuil pour ladite grandeur prédéterminée et qu'on décide de l'activation du mode spécial de commande de changement de rapport en fonction du résultat de la comparaison de ladite valeur de seuil avec une valeur de mesure de ladite grandeur prédéterminée.

**3.** Procédé selon la revendication 1 ou 2, **caractérisé en ce que** ladite grandeur prédéterminée est le régime primaire de transmission et **en ce que** ladite valeur de référence ($R_R$) est une valeur de seuil pour le régime primaire de transmission ($R_P$) en dessous de laquelle le mode spécial de commande de changement de rapport est activé.

**4.** Procédé selon l'une quelconque des revendications 1 à 3, **caractérisé en ce qu'**on détermine la valeur courante de la vitesse moyenne du véhicule (Vm) par application d'un filtrage passe bas à la valeur de mesure de la vitesse instantanée (Vi) du véhicule, la constante de temps du filtre passe bas étant plus élevée lorsque la vitesse instantanée du véhicule (Vi) augmente que lorsque la vitesse instantanée (Vi) du véhicule diminue.

**5.** Procédé selon l'une quelconque des revendications 1 à 4, **caractérisé en ce qu'**on détermine la valeur courante de la décélération (D) du véhicule à partir d'une approximation de la dérivée temporelle de la valeur de mesure de la vitesse instantanée (Vi) du véhicule.

**6.** Procédé selon l'une quelconque des revendications 1 à 5, **caractérisé en ce qu'**il comprend une phase de prédétermination de ladite valeur de référence ($R_R$) pour chaque couple d'une pluralité de couples de valeurs de vitesse moyenne et de décélération, ladite valeur de référence ($R_R$) étant déterminée expérimentalement pour les couples de valeurs de vitesse moyenne et de décélération correspondant à des situations de roulage nécessitant le déclenchement du mode spécial de commande de changement de rapport et ladite valeur de référence ($R_R$) étant fixée à une valeur arbitrairement basse pour les couples de valeurs de vitesse moyenne et de décélération correspondant à des situations de roulage ne nécessitant pas le déclenchement du mode spécial de commande de changement de rapport.

**7.** Procédé selon la revendication 6, **caractérisé en ce qu'**il consiste en outre à enregistrer ladite valeur de référence ($R_R$) obtenue lors de la phase de prédétermination dans une table à deux dimensions indexée par rapport au couple de valeurs de vitesse moyenne et de décélération pour lequel ladite valeur de référence ($R_R$) a été obtenue, la détermination à l'étape b) de la valeur de référence ($R_R$) en fonction de la valeur courante de la vitesse moyenne (Vm) et de la valeur courante de la décélération (D) du véhicule automobile s'effectuant par lecture dans ladite table à deux dimensions en fonction du couple de valeurs courantes de vitesse moyenne (Vm, D) et de décélération déterminé à l'étape a).

**8.** Procédé selon la revendication 6 ou 7, **caractérisé en ce que** ladite valeur de référence ($R_R$) est prédéterminée pour chaque couple de ladite pluralité de couples de valeurs de vitesse moyenne et de décélération et pour chaque jeu de lois de commande déterminant pour ledit véhicule le mode normal de commande de changement de rapport.

**9.** Procédé selon l'une quelconque des revendications 1 à 8, **caractérisé en ce que** la durée de maintien du mode spécial de commande de changement de rapport dépend d'une durée prédéterminée de temporisation, du fait que le rapport demandé par le mode normal de commande de changement de rapport devient égal à 1, et du fait que le conducteur accélère ou pas.

**10.** Procédé selon l'une quelconque des revendications 1 à 8, **caractérisé en ce qu'**il consiste en outre à

- déclencher l'écoulement d'une temporisation dès que le conducteur du véhicule accélère,
- geler l'écoulement de la temporisation tant que le conducteur n'accélère pas,
- sortir du mode spécial pour revenir au mode normal après l'écoulement de la temporisation,
- sortir du mode spécial pour revenir au mode normal avant la fin de l'écoulement de la temporisation si le rapport demandé devient égal à 1.

**11.** Procédé selon l'une quelconque des revendications 1 à 10, **caractérisé en ce que** le rapport RX est le rapport 2 ou 3.

**12.** Application du procédé selon l'une quelconque des revendications précédentes au rétrogradage anticipé de la transmission au rapport 1 dans une situation du type « cédez le passage », à l'approche d'un rond-point ou d'une intersection.

**Claims**

**1.** Method for controlling the changing of gear ratio for an automatic transmission having discrete gear ratios in a motor vehicle making it possible to manage the downshifting on braking from a current gear ratio RX to the first gear ratio, a method according to which on the occurrence of at least one particular driving situation of the vehicle, a special mode of controlling the changing of gear ratio is used instead of the normal mode of controlling the changing of gear ratio, **characterized in that** it consists in:

a) determining the current value of the average speed (Vm) and the current value of the deceleration (D) of the motor vehicle,
b) determining a reference value ($R_R$) of a predetermined parameter ($R_P$) as a function of the current value of the average speed (Vm) and of the current value of the deceleration (D) of the motor vehicle,
c) deciding, according to said reference value ($R_R$), whether or not to activate said special mode of controlling the changing of gear ratio, consisting in changing, when the vehicle is braking, from the gear ratio RX to the first gear ratio in an early manner in comparison with the normal mode of controlling the changing of gear ratio.

**2.** Method according to Claim 1, **characterized in that** said reference value ($R_R$) is a threshold value of said predetermined parameter and that the decision to activate the special mode of controlling the changing of gear ratio is taken depending on the result of the comparison of said threshold value with a measured value of said predetermined parameter.

**3.** Method according to Claim 1 or 2, **characterized in that** said predetermined parameter is the primary transmission speed and said reference value ($R_R$) is a threshold value for the primary transmission ($R_P$) speed below which the special mode of controlling the changing of gear ratio is activated.

**4.** Method according to any one of Claims 1 to 3, **characterized in that** the current value of the average speed of the vehicle (Vm) is determined by application of a low-pass filtering to the measured value of the instantaneous speed (Vi) of the vehicle, the time constant of the low pass filter being greater when the instantaneous speed (Vi) of the vehicle is increases than when the instantaneous speed of the vehicle (Vi) reduces.

**5.** Method according to any one of Claims 1 to 4, **characterized in that** the current value of the deceleration (D) of the vehicle is determined from an approximation of the derivative with respect to time of the measured value of the instantaneous speed (Vi) of the vehicle.

**6.** Method according to any one of Claims 1 to 5, **characterized in that** it comprises a phase of predetermination of said reference value ($R_R$) for each pair of a plurality of pairs of values of average speed and of deceleration, said reference value ($R_R$) being determined experimentally for the pairs of average speed and deceleration values corresponding to driving situations necessitating the initiation of the special mode of controlling the changing of gear ratio and said reference value ($R_R$) being fixed at an arbitrarily low value for the pairs of values of average speed and deceleration corresponding to driving situations not necessitating the initiation of the special mode of controlling the changing of gear ratio.

**7.** Method according to Claim 6, **characterized in that** it furthermore consists in recording said reference value ($R_R$) obtained during the predetermination phase in a two-dimensional table indexed with respect to the pair of values of average speed and of deceleration for which said reference value ($R_R$) was obtained, the determination in step b) of the reference value ($R_R$) as a function of the current value of the average speed (Vm) and of the current value of the deceleration (D) of the motor vehicle being carried out by reading from said two-dimensional table according to the pair of current values of average speed and of deceleration (Vm, D) determined in step a).

**8.** Method according to Claim 6 or 7, **characterized in that** said reference value ($R_R$) is predetermined for each pair of said plurality of pairs of values of average speed and of deceleration and for each set of control laws determining for said vehicle the normal mode of controlling the changing of gear ratio.

**9.** Method according to any one of Claims 1 to 8, **characterized in that** the duration of maintaining the special mode of controlling the changing of gear ratio depends on a predetermined timing duration, on the fact that the gear ratio requested by the normal mode of controlling the changing of gear ratio becomes equal to first gear ratio and on the fact that the driver is or is not accelerating.

**10.** Method according to any one of Claims 1 to 8, **characterized in that** it furthermore consists in

- initiating the elapsing of a timing period as soon as the driver of the vehicle accelerates,
- freezing the elapsing of the timing period whilst the driver is not accelerating,
- exiting the special mode in order to return to the normal mode after the elapsing of the timing period,
- exiting from the special mode in order to return to the normal mode before the end of the elapsing of the timing period if the requested gear ratio becomes the first gear ratio.

**11.** Method according to any one of Claims 1 to 10, **characterized in that** the gear ratio RX is the second or third gear ratio.

**12.** Application of the method according to any one of the preceding claims to the early downshifting of the transmission to first gear ratio in a situation of the "give way" type, on approaching a roundabout or an intersection.

**Patentansprüche**

**1.** Verfahren zum Steuern des Schaltvorgangs für ein automatisches Getriebe mit getrennten Gängen eines Motorfahrzeugs, um das Herunterschalten beim Bremsen von einem Gang RX, der zum 1. Gang läuft, zu verwalten, Verfahren, gemäß dem beim Auftreten von mindestens einer bestimmten Rollsituation des Fahrzeugs der normale Steuerungsmodus des Schaltvorgangs durch einen speziellen Steuerungsmodus des Schaltvorgangs ersetzt wird, **dadurch gekennzeichnet, dass** es besteht aus:

a) Bestimmen des gewöhnlichen Wertes der mittleren Geschwindigkeit (Vm) und des gewöhnlichen Wertes der Abbremsung (D) des Motorfahrzeugs,
b) Bestimmen eines Referenzwertes ($R_R$) einer vorherbestimmten Größe ($R_P$) in Abhängigkeit des gewöhnlichen Wertes der mittleren Geschwindigkeit (Vm) und des gewöhnlichen Wertes der Abbremsung des Motorfahrzeugs (D),
c) Entscheiden, in Abhängigkeit des Referenzwertes ($R_R$), ob der spezielle Steuerungsmodus des Schaltvorgangs aktiviert werden soll oder nicht, wobei dies darin besteht, beim Bremsen des Fahrzeugs vorzeitig hinsichtlich des normalen Steuerungsmodus des Schaltvorgangs vom Gang RX in den 1. Gang überzugehen.

2. Verfahren nach Anspruch 1, **dadurch gekennzeichnet, dass** der Referenzwert ($R_R$) ein Schwellenwert für die vorherbestimmte Größe ist und dass die Aktivierung des speziellen Steuerungsmodus des Schaltvorgangs in Abhängigkeit des Ergebnisses des Vergleichs zwischen diesem Schwellenwert und einem Messwert der vorherbestimmten Größe entschieden wird.

3. Verfahren nach Anspruch 1 oder 2, **dadurch gekennzeichnet, dass** die vorherbestimmte Größe der primäre Übersetzungszustand ist und dass der Referenzwert ($R_R$) ein Schwellenwert für den primären Übersetzungszustand ($R_P$) ist, der kleiner als derjenige ist, bei dem der spezielle Steuerungsmodus des Schaltvorgangs aktiviert wird.

4. Verfahren nach einem der Ansprüche 1 bis 3, **dadurch gekennzeichnet, dass** der gewöhnliche Wert der mittleren Geschwindigkeit des Fahrzeugs ($Vm$) durch die Anwendung eines Tiefpassfilters auf den Messwert der lokalen Geschwindigkeit ($Vi$) des Fahrzeugs bestimmt wird, wobei die Zeitkonstante des Tiefpassfilters höher ist, wenn die lokale Geschwindigkeit des Fahrzeugs ($Vi$) zunimmt, als wenn die lokale Geschwindigkeit ($Vi$) des Fahrzeugs abnimmt.

5. Verfahren nach einem der Ansprüche 1 bis 4, **dadurch gekennzeichnet, dass** der gewöhnliche Wert der Abbremsung ($D$) des Fahrzeugs aus einer Annäherung der zeitlichen Ableitung des Messwertes der lokalen Geschwindigkeit ($Vi$) des Fahrzeugs bestimmt wird.

6. Verfahren nach einem der Ansprüche 1 bis 5, **dadurch gekennzeichnet, dass** es eine Vorgabephase des Referenzwertes ($R_R$) für jedes Paar von mehreren Paaren von Werten der mittleren Geschwindigkeit und Abbremsung umfasst, wobei der Referenzwert ($R_R$) experimentell für die Paare der Werte der mittleren Geschwindigkeit und Abbremsung entsprechend der Rollsituationen, welche das Auslösen des speziellen Steuerungsmodus des Schaltvorgangs erfordern, bestimmt wird, und wobei der Referenzwert ($R_R$) für die Paare von Werten der mittleren Geschwindigkeit und Abbremsung entsprechend der Rollsituationen, welche das Auslösen des speziellen Steuerungsmodus des Schaltvorgangs nicht erfordern, auf einem willkürlich niedrigen Wert festgelegt ist.

7. Verfahren nach Anspruch 6, **dadurch gekennzeichnet, dass** es ferner aus dem Aufzeichnen des Referenzwertes ($R_R$), der während der Vorgabephase erhalten wird, in einer zweidimensionalen Tabelle besteht, die gegenüber dem Paar von Werten der mittleren Geschwindigkeit und Abbremsung, für die der Referenzwert ($R_R$) erhalten wurde, indexiert ist, wobei das Bestimmen in Schritt b) des Referenzwertes ($R_R$) in Abhängigkeit des gewöhnlichen Wertes der mittleren Geschwindigkeit ($Vm$) und des gewöhnlichen Wertes der Abbremsung ($D$) des Motorfahrzeugs durch das Lesen dieser zweidimensionalen Tabelle in Abhängigkeit des Paars von gewöhnlichen Werten der mittleren Geschwindigkeit ($Vm$, $D$) und der in Schritt a) bestimmten Abbremsung erfolgt.

8. Verfahren nach Anspruch 6 oder 7, **dadurch gekennzeichnet, dass** der Referenzwert ($R_R$) für jedes Paar der mehreren Paare von Werten der mittleren Geschwindigkeit und Abbremsung und für jeden Spielraum der Steuerungsgesetze, der den normalen Steuerungsmodus des Schaltvorgangs für das Fahrzeug bestimmt, vorherbestimmt ist.

9. Verfahren nach einem der Ansprüche 1 bis 8, **dadurch gekennzeichnet, dass** die Dauer der Aufrechterhaltung des speziellen Steuerungsmodus des Schaltvorgangs von einer vorherbestimmten Dauer einer Wartezeit abhängt, da der vom normalen Steuerungsmodus des Schaltvorgangs angeforderte Gang gleich 1 wird und da der Fahrer beschleunigt oder nicht.

10. Verfahren nach einem der Ansprüche 1 bis 8, **dadurch gekennzeichnet, dass** es ferner besteht aus dem

   - Auslösen des Ablaufens einer Wartezeit, sobald der Fahrer des Fahrzeugs beschleunigt,
   - Einfrieren lassen des Ablaufens der Wartezeit, solange der Fahrer nicht beschleunigt,
   - Aussteigen aus dem speziellen modus, um nach dem Ablaufen der Wartezeit zum normalen Modus zurückzukehren,
   - Aussteigen aus dem speziellen Modus, um vor dem Ende des Ablaufens der Wartezeit zum normalen Modus zurückzukehren, wenn der angeforderte Gang gleich 1 wird.

11. Verfahren nach einem der Ansprüche 1 bis 10, **dadurch gekennzeichnet, dass** der Gang RX der 2. oder 3. Gang ist.

12. Anwendung des Verfahrens nach einem der vorhergehenden Ansprüche beim vorzeitigen Herunterschalten der Übersetzung in den 1. Gang in einer Situation des Typs "Vorfahrt gewähren", beim Heranfahren an einen Kreisverkehr oder eine Kreuzung.

**Fig. 1**

**Fig. 2**

|  |  | D (m/s²) | | | | | |
|---|---|---|---|---|---|---|---|
|  |  | **0** | **0,5** | **1,5** | **2,5** | **3** | **5** |
| **Vm** | **0** | 0 | 0 | 900 | 900 | 900 | 900 |
| **(km/h)** | **10** | 0 | 0 | 900 | 900 | 900 | 1000 |
|  | **20** | 0 | 0 | 900 | 900 | 1000 | 1200 |
|  | **30** | 0 | 900 | 900 | 1000 | 1500 | 2200 |
|  | **50** | 0 | 1000 | 1000 | 1200 | 1500 | 2200 |
|  | **80** | 0 | 1000 | 1000 | 1200 | 1500 | 2200 |

**Fig 3**

**Fig. 4**

**EP 1 753 980 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2765652